# EUROPÄISCHE PATENTSCHRIFT

(11) **EP 1 044 657 B1**
(45) Veröffentlichungstag und Bekanntmachung des Hinweises auf die Patenterteilung: **05.09.2007**
(21) Anmeldenummer: 00105654.8
(22) Anmeldetag: 17.03.2000
(51) Int. Cl.: A61C 3/02

(54) **Rotierendes Werkzeug zur spanabhebenden Bearbeitung von Werkstücken**
Rotating tool for machining workpieces
Outil tournant destiné à l'usinage de pièces

(30) Priorität: 12.04.1999 DE 19916336
(43) Veröffentlichungstag der Anmeldung: 18.10.2000
(73) Patentinhaber: EDENTA AG, 9434 Au (CH)
(72) Erfinder: Grätz, Dieter, c/o Edenta AG, 9434 Au (CH)
(74) Vertreter: Liesegang, Roland

(56) Entgegenhaltungen:
- DE-C- 3 430 418
- US-A- 4 681 541
- US-A- 5 543 210

## Beschreibung

Die Erfindung betrifft ein rotierendes Werkzeug zur spanabhebenden Bearbeitung, insbesondere für die Bearbeitung in der Zahnmedizin und der Zahntechnik, mit einem Arbeitsteil, auf dessen äußerer Umfangsfläche eine Nickel-Schicht aufgebracht ist, in welche Diamantkörper eingebettet sind (DE 38 42 915 C1). Beispiele für derartige rotierende Werkzeuge sind Schleifwerkzeuge, Fräswerkzeuge und dergleichen. Die Nickel-Schicht schützt den Arbeitsteil gegen Korrosion und bindet die Diamantkörner an den Arbeitsteil. Nickel-Schichten sind jedoch verhältnismäßig weich und verschleißanfällig. Beim Einsatz des Werkzeuges besorgen die Diamantkörner die Schneidarbeit und sind daher am stärksten belastet. Jedoch ist die Belastung in der Umfangsfläche des Arbeitsteils insbesondere durch anfallende Späne noch so groß, daß die Nickel-Schicht mit zunehmender Betriebsdauer verschleißt.

Es wurde festgestellt, daß aufgrund dieses Verschleißes die Diamantkörner sich lockern und aus der Nickel-Schicht herauslösen können, so daß das Werkzeug unbrauchbar wird.

Es ist an sich bekannt, zur Erhöhung der Korrosionsfestigkeit und Oberflächenhärte Werkstücke mit einer Chromnitrid-Schicht zu überziehen.

Ferner ist ein Werkzeug gemäß dem Oberbegriff des Anspruchs 1 bekannt, bei dem die nicht näher spezifizierte Einbettungsschicht für die Diamantkörner sowie diese selbst von einer Schicht aus Titan-, Bor- oder Wolframnitrid überzogen ist (US-A-4 681 541). Diese Schicht kann mit einem geringen Anteil von Chrom oder Vanadium dotiert sein, um eine Verringerung der Porosität und eine Verbesserung der Härte, Schmierfähigkeit und Wärmeübertragung zu erreichen.

Der Erfindung liegt die Aufgabe zugrunde, ein Werkzeug der beschriebenen Art so auszugestalten, daß die Standfestigkeit erhöht wird.

Zur Lösung dieser Aufgabe dient Anspruch 1.

Bei einem Werkzeug gemäß der Erfindung ist die Nickel-Schicht zugleich mit den darin eingebetteten Diamantkörnern von einer Schicht aus Chromnitrid überzogen, die sowohl den Verschleiß der Nickel-Schicht herabsetzt als auch die Diamantkörner besser als bisher in der Nickel-Schicht verankert. Die Chromnitrid-Schicht füllt dabei auch gleichzeitig die Unebenheiten der Diamantkörner sowie der Trennfugen zwischen der Nickel-Schicht und den Diamantkörnern aus. Dadurch werden die Diamantkörner noch besser verankert. Überraschend erhöht sich hierdurch die Standfestigkeit eines erfindungsgemäßen Werkzeuges um bis zu dem Vierfachen.

Die Erfindung ist im folgenden anhand schematischer Zeichnungen an einem Ausführungsbeispiel mit weiteren Einzelheiten näher erläutert. Es zeigen:
- Fig. 1: in vergrößertem Maßstab die Ansicht eines teilweise geschnittenen Schleifwerkzeuges gemäß der Erfindung;
- Fig. 2: einen Teilschnitt im Bereich des Kreises bei II in Fig. 1 in weiter vergrößertem Maßstab.

Das gezeigte Schleifwerkzeug hat einen Arbeitsteil 1, der mittels eines Halses 2 mit einem Einspannschaft 3 verbunden ist. Über diesen Einspannschaft kann das Werkzeug in das Spannfutter eines nicht gezeigten Arbeitsgerätes eingespannt werden.

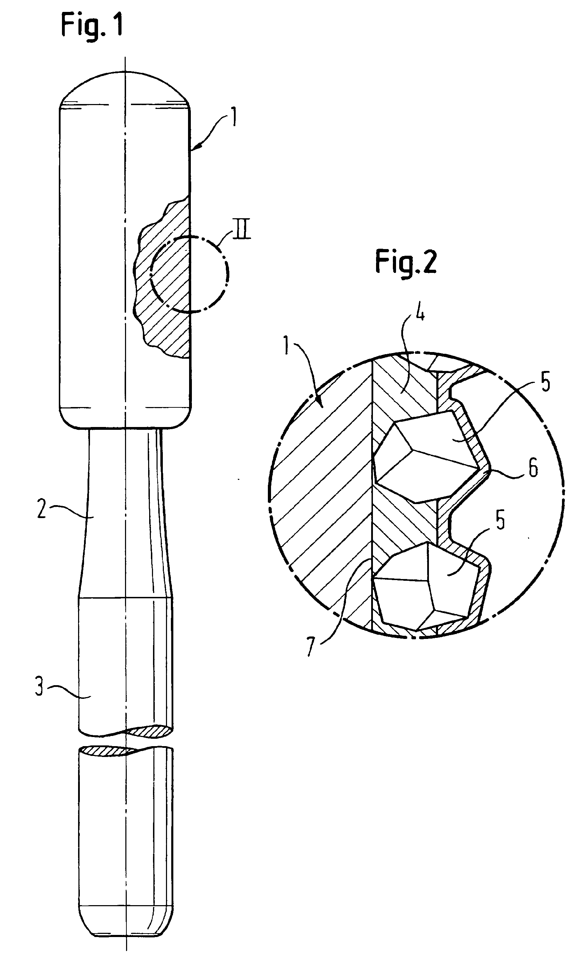

Gemäß Figur 2 ist die äußere Umfangsfläche 7 des Arbeitsteiles 1 von einer Nickel-Schicht 4 bedeckt. In die Nickel-Schicht 4 sind Diamantkörner 5 eingebettet. Sowohl die zwischen den Diamantkörnern 5 liegenden Flächenbereiche der Nickel-Schicht als auch die über diese Nikkel-Schicht hinausragenden Flächenbereiche der Diamantkörner 5 sind von einer Dünnschicht 6 aus Chromnitrid (CrN) überzogen. Diese Dünnschicht 6 schützt aufgrund ihrer größeren Härte die Nickel-Schicht 4 gegen vorzeitigen Verschleiß und verankert gleichzeitig aufgrund ihres Eindringens in Unebenheiten im Bereich der Trennfuge zwischen Nickel-Schicht und Diamantkörnern diese besser als bisher in der Nickel-Schicht. Untersuchungen haben ergeben, daß die Standfestigkeit von erfindungsgemäß ausgebildeten Werkzeugen bis um das Vierfache diejenige bekannter Werkzeuge überschreitet.

Ein Werkzeug nach der Erfindung ist nicht nur im Bereich der Zahnmedizin und Zahntechnik sondern auch bei anderen feinwerktechnischen Bearbeitungsaufgaben einsetzbar. Der Durchmesser des Einspannschaftes kann in der Praxis in der Größenordnung zwischen 1,0 und 4.0 mm, insbesondere bei 1,60, 2,35 und 3 mm liegen. Die Werkzeuglänge kann im Bereich zwischen 10 und 60 mm betragen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Rotierendes Werkzeug zur spanabhebenden Bearbeitung in der Zahnmedizin und der Zahntechnik, mit einem Arbeitsteil (1), auf dessen äußerer Umfangsfläche eine Nickel-Schicht (4) aufgebracht ist, in welche Diamantkörner (5) eingebettet sind, **dadurch gekennzeichnet, daß** zwischen den Diamantkörnern (5) liegende Flächenbereiche der Nickel-Schicht (4) und die daraus herausragenden Diamantkörner (5) von einer Schicht (6) aus Chromnitrid (CrN) überdeckt sind.

2. Werkzeug nach Anspruch 1, **dadurch gekennzeichnet, daß** die Schicht aus Chromnitrid eine Stärke von 1 bis 4 µm hat.

## Claims

1. Rotary tool for material removing work in dentistry, comprising a machining portion (1) having an outer circumferential surface coated with a nickel layer (4) in which diamond particles are embedded, **characterized in that** surface portions of the nickel layer (4) located between the diamond particles (5) and the diamond particles (5) protruding from the nickel layer are covered by a layer (6) of chromium nitride (CrN).

2. The tool as claimed in claim 1, **characterized in that** the chromium nitride layer has a thickness of from 1 to 4 µm.

## Revendications

1. Outil tournant destiné à l'usinage de pièces en médecine dentaire et en technique dentaire, avec une partie de travail (1), dont la surface périphérique extérieure porte une couche de nickel (4) dans laquelle des grains de diamant (5) sont enrobés, **caractérisé en ce que** les zones de la surface de la couche de nickel (4) situées entre les grains de diamant (5) et les grains de diamant (5) émergeant de celle-ci sont recouverts d'une couche (6) de nitrure de chrome (CrN).

2. Outil selon la revendication 1, **caractérisé en ce que** la couche en nitrure de chrome a une épaisseur de 1 à 4 µm.
